# EUROPEAN PATENT APPLICATION

(11) **EP 3 477 226 A1**
(43) Date of publication of application: **01.05.2019**
(21) Application number: 17819180.5
(22) Date of filing: 23.06.2017
(51) Int. Cl.: F25B 41/04, F25B 49/02

(54) **MULTI-SPLIT SYSTEM AND CONTROL METHOD THEREOF**

(30) Priority: 28.06.2016 CN 201610505572
(71) Applicant: GD Midea Heating & Ventilating Equipment Co., Ltd., Foshan, Guangdong 528311 (CN); Midea Group Co., Ltd., Foshan, Guangdong 528311 (CN)
(72) Inventor: YANG, Guozhong, Foshan Guangdong 528311 (CN); YANG, Kun, Foshan Guangdong 528311 (CN)
(74) Representative: Lam, Alvin
(86) International application number: PCT/CN2017/089771
(87) International publication number: WO 2018/001183

(57) **Abstract**

A multi-split system and a control method thereof are provided. The control method comprises the steps of: obtaining a discharge superheating degree from a compressor (3) and determining whether the discharge superheating degree is less than a first predetermined superheating degree; if the discharge superheating degree is less than the first predetermined superheating degree, further obtaining a pre-valve supercooling degree of a cooling throttle member (21), and determining whether the pre-valve supercooling degree is less than a predetermined supercooling degree; and if the pre-valve supercooling degree is less than the predetermined supercooling degree, controlling the degree of opening of the cooling throttle member (21) to remain unchanged, adjusting a vent target superheating degree of a plurality of indoor units (300) to a first target superheating degree, and controlling an indoor throttle member (21) of the plurality of the indoor units (300) according to the first target superheating degree. The method controls the cooling throttle member (21) to remain unchanged when the pre-valve supercooling degree of the cooling throttle member (21) is low, and controls the indoor cooling units (300) according to the adjusted target superheating degree, thereby rapidly setting the pre-valve supercooling degree of the cooling throttle member (21) while ensuring stable operation of the compressor (3).

## Description

### FIELD

The present disclosure relates to the air conditioning field, and more particularly to a multi-split system and a control method thereof.

### BACKGROUND

When a multi-split system is operated in a pure refrigeration mode or a main refrigeration mode, a part of high pressure liquid refrigerant is throttled into a low temperature and low pressure refrigerant by a supercooling electronic expansion valve in a distribution device, and then flows through a bypass of a heat exchanger to cool a high pressure refrigerant in a main path of the heat exchanger so as to provide a supercooling degree for the refrigerant in the main path. Therefore, the control of the supercooling electronic expansion valve will target a supercooling degree of a liquid refrigerant at an outlet of the main path of the heat exchanger. However, if the supercooling electronic expansion valve is adjusted only taking the supercooling degree of the liquid refrigerant at the outlet of the main path of the heat exchanger as the control target, the following problems will exist:
First, the supercooling electronic expansion valve is directly communicated with a return side, when a target supercooling degree is reached, if an opening of the supercooling electronic expansion valve is too small, the refrigerant after heat exchanging with the refrigerant of the main path and getting out of an outlet of the bypass of the heat exchanger has an overlarge superheating degree that, after mixed with a refrigerant from an outlet of a refrigeration indoor unit, produces return air with a larger superheating degree, which causes a discharge temperature of a compressor to rise continuously, thereby affecting the reliability of the compressor.
Second, the supercooling degree of the liquid refrigerant at the outlet of the main path of the heat exchanger is not monotonically related to the opening of the supercooling electronic expansion valve, when the opening of the supercooling electronic expansion valve is gradually increased, an inlet supercooling degree of the supercooling electronic expansion valve at a steady state will increase first and then decrease. In some situations (such as at the end of oil return), when the opening of the supercooling electronic expansion valve is increased, an outlet supercooling degree of the main path of the heat exchanger will lag for a period of time, in such a case, if control is performed according to the target supercooling degree, the opening of the supercooling electronic expansion valve will continue to increase until reaching the maximum. As an inlet pressure of the supercooling electronic expansion valve is reduced, a throttling effect is weakened, and a heat exchange temperature difference in the heat exchanger is greatly decreased, there is no inlet supercooling degree of the supercooling electronic expansion valve instead, which will lead to some problems, for example, split-flow among refrigeration indoor units is uneven, and throttling noise increases.

Moreover, when a gas-liquid mixture passes through the valve, the gas causes blockage, so that the supercooling effect is further deteriorated. On the one hand, a pressure drop of the gas-liquid mixture flowing through the heat exchanger is greatly increased, an energy efficiency is reduced, and the noise is increased; on the other hand, the overlarge opening of the supercooling electronic expansion valve leads to that the refrigerant flowing through the refrigeration indoor unit is greatly reduced, an opening of an electronic expansion valve of the refrigeration indoor unit is increased, and low pressure rises, thereby resulting in deteriorated refrigerating effect.

### SUMMARY

Embodiments of the present disclosure seek to solve at least one of the problems existing in the related art to at least some extent.

Accordingly, a first objective of the present disclosure is to provide a control method of a multi-split system, by which an inlet supercooling degree of a refrigeration throttling element is quickly established under the premise of ensuring reliable operation of a compressor by controlling the refrigeration throttling element to remain unchanged and controlling a refrigerating indoor unit according to a target superheating degree after adjusted when the inlet supercooling degree of the refrigeration throttling element is lower.

A second objective of the present disclosure is to provide a non-transitory computer-readable storage medium.

A third objective of the present disclosure is to provide a multi-split system.

To achieve the above objectives, embodiments of a first aspect of the present disclosure provide a control method of a multi-split system. The multi-split system includes an outdoor unit, a distribution device, and a plurality of indoor units. The outdoor unit includes a compressor. The distribution device includes a main loop, a cooling loop, and a refrigeration throttling element disposed between an outlet of the main loop and an inlet of the cooling loop. The refrigeration throttling element is configured to perform a throttling control on a refrigerant entering the cooling loop when the multi-split system is operated in a main refrigeration mode or a pure refrigeration mode. And each of the plurality of the indoor units is provided with an indoor throttling element. The control method includes: acquiring a discharge superheating degree of the compressor, and determining whether the discharge superheating degree is less than a first preset superheating degree; acquiring an inlet supercooling degree of the refrigeration throttling element, and determining whether the inlet supercooling degree of the refrigeration throttling element is less than a preset supercooling degree if the discharge superheating degree is less than the first preset superheating degree; and controlling an opening of the refrigeration throttling element to remain unchanged and adjusting a target outlet superheating degree of the plurality of the indoor units to a first target superheating degree if the inlet supercooling degree of the refrigeration throttling element is less than the preset supercooling degree, and controlling the indoor throttling elements of the plurality of the indoor units according to the first target superheating degree.

With the control method of the multi-split system according to embodiments of the present disclosure, when the multi-split system is operated in the pure refrigeration mode or the main refrigeration mode, the discharge superheating degree of the compressor is acquired, and it is determined whether the discharge superheating degree is less than the first preset superheating degree. If the discharge superheating degree is less than the first preset superheating degree, the inlet supercooling degree of the refrigeration throttling element is acquired, and it is determined whether the inlet supercooling degree of the refrigeration throttling element is less than the preset supercooling degree. If the inlet supercooling degree of the refrigeration throttling element is less than the preset supercooling degree, the opening of the refrigeration throttling element is controlled to remain unchanged, the target outlet superheating degree of the plurality of the indoor units is adjusted to the first target superheating degree, and the indoor throttling elements of the plurality of the indoor units are controlled according to the first target superheating degree, thereby quickly establishing the inlet supercooling degree of the refrigeration throttling element under the premise of ensuring reliable operation of the compressor.

In an embodiment of the present disclosure, when the inlet supercooling degree of the refrigeration throttling element is greater than or equal to the preset supercooling degree, the refrigeration throttling element is controlled according to a target outlet superheating degree of the cooling loop, and the target outlet superheating degree of the plurality of the indoor units is adjusted to a second target superheating degree. The second target superheating degree is less than the first target superheating degree.

In an embodiment of the present disclosure, when the discharge superheating degree is greater than or equal to the first preset superheating degree and less than a second preset superheating degree, the refrigeration throttling element is controlled according to a target outlet superheating degree of the cooling loop, and the target outlet superheating degree of the plurality of the indoor units is adjusted to a second target superheating degree. The second target superheating degree is less than the first target superheating degree.

In an embodiment of the present disclosure, when the discharge superheating degree is greater than or equal to the second preset superheating degree, the refrigeration throttling element is controlled according to the target outlet superheating degree of the cooling loop, and the target outlet superheating degree of the plurality of the indoor units is adjusted to a third target superheating degree. The third target superheating degree is less than the second target superheating degree.

In an embodiment of the present disclosure, the control method of the multi-split system as described above further includes: determining whether the compressor is in a startup phase; and controlling the refrigeration throttling element to maintain a preset opening if the compressor is in the startup phase.

To achieve the above objectives, embodiments of a second aspect of the present disclosure provide a non-transitory computer-readable storage medium having stored therein computer programs that, when executed by a processor, cause the control method of the multi-split system as described in any embodiment of the first aspect of the present disclosure to be performed.

With the non-transitory computer-readable storage medium according to embodiments of the present disclosure, by executing the control method of the multi-split system as described in any embodiment of the first aspect of the present disclosure, the inlet supercooling degree of the refrigeration throttling element is quickly established under the premise of ensuring reliable operation of the compressor by controlling the refrigeration throttling element to remain unchanged and controlling the refrigerating indoor unit according to a target supercooling degree after adjusted.

To achieve the above objectives, embodiments of a third aspect of the present disclosure provide a multi-split system. The multi-split system includes an outdoor unit, a distribution device, a plurality of indoor units, and a control module. The outdoor unit includes a compressor. The distribution device includes a main loop, a cooling loop, and a refrigeration throttling element disposed between an outlet of the main loop and an inlet of the cooling loop. The refrigeration throttling element is configured to perform a throttling control on a refrigerant entering the cooling loop when the multi-split system is operated in a main refrigeration mode or a pure refrigeration mode. Each of the plurality of the indoor units is provided with an indoor throttling element. The control module is configured to: acquire a discharge superheating degree of the compressor, and determine whether the discharge superheating degree is less than a first preset superheating degree; acquire an inlet supercooling degree of the refrigeration throttling element, and determine whether the inlet supercooling degree of the refrigeration throttling element is less than a preset supercooling degree if the discharge superheating degree is less than the first preset superheating degree; and control an opening of the refrigeration throttling element to remain unchanged and adjust a target outlet superheating degree of the plurality of the indoor units to a first target superheating degree when the inlet supercooling degree of the refrigeration throttling element is less than the preset supercooling degree, and control the indoor throttling elements of the plurality of the indoor units according to the first target superheating degree.

With the multi-split system according to embodiments of the present disclosure, when the multi-split system is operated in the pure refrigeration mode or the main refrigeration mode, the control module acquires the discharge superheating degree of the compressor, and determines whether the discharge superheating degree is less than the first preset superheating degree. If the discharge superheating degree is less than the first preset superheating degree, the control module further acquires the inlet supercooling degree of the refrigeration throttling element, and determines whether the inlet supercooling degree of the refrigeration throttling element is less than the preset supercooling degree. If the inlet supercooling degree of the refrigeration throttling element is less than the preset supercooling degree, the control module controls the opening of the refrigeration throttling element to remain unchanged, adjusts the target outlet superheating degree of the plurality of the indoor units to the first target superheating degree, and controls the indoor throttling elements of the plurality of the indoor units according to the first target superheating degree, thereby quickly establishing the inlet supercooling degree of the refrigeration throttling element under the premise of ensuring reliable operation of the compressor.

In an embodiment of the present disclosure, when the inlet supercooling degree of the refrigeration throttling element is greater than or equal to the preset supercooling degree, the control module is configured to control the refrigeration throttling element according to a target outlet superheating degree of the cooling loop, and adjust the target outlet superheating degree of the plurality of the indoor units to a second target superheating degree. The second target superheating degree is less than the first target superheating degree.

In an embodiment of the present disclosure, when the discharge superheating degree is greater than or equal to the first preset superheating degree and less than a second preset superheating degree, the control module is configured to control the refrigeration throttling element according to a target outlet superheating degree of the cooling loop, and adjust the target outlet superheating degree of the plurality of the indoor units to a second target superheating degree. The second target superheating degree is less than the first target superheating degree.

In an embodiment of the present disclosure, when the discharge superheating degree is greater than or equal to the second preset superheating degree, the control module is configured to control the refrigeration throttling element according to the target outlet superheating degree of the cooling loop, and adjust the target outlet superheating degree of the plurality of the indoor units to a third target superheating degree. The third target superheating degree is less than the second target superheating degree.

In an embodiment of the present disclosure, the control module is further configured to determine whether the compressor is in a startup phase, and control the refrigeration throttling element to maintain a preset opening when it is determined that the compressor is in the startup phase.

### BRIEF DESCRIPTION OF THE DRAWINGS

Fig. 1 is a schematic diagram of a multi-split system according to an embodiment of the present disclosure;
Fig. 2 is a flow chart of a control method of a multi-split system according to embodiments of the present disclosure; and
Fig. 3 is a flow chart of a control method of a multi-split system according to an embodiment of the present disclosure.

### DETAILED DESCRIPTION

Embodiments of the present disclosure will be described in detail below, examples of which are shown in the accompanying drawings, in which the same or similar elements and elements having same or similar functions are denoted by the sane or like reference numerals throughout the descriptions. The embodiments described below with reference to the accompanying drawings are explanatory and illustrative, which are used to generally understand the present disclosure, and shall not be construed to limit the present disclosure.

In the following, a multi-split system and a control method thereof according to embodiments of the present disclosure will be described with reference to drawings.

In embodiments of the present disclosure, a multi-split system includes an outdoor unit 100, a distribution device 200, a plurality of indoor units 300 and a control module (not shown in the figures). The outdoor unit 100 includes a compressor 1. The distribution device 200 includes a main loop, a cooling loop, and a refrigeration throttling element 21 disposed between an outlet of the main loop and an inlet of the cooling loop. The refrigeration throttling element 21 is configured to perform a throttling control on a refrigerant entering the cooling loop when the multi-split system is operated in a main refrigeration mode or a pure refrigeration mode. Each of the plurality of the indoor units 300 is provided with an indoor throttling element.

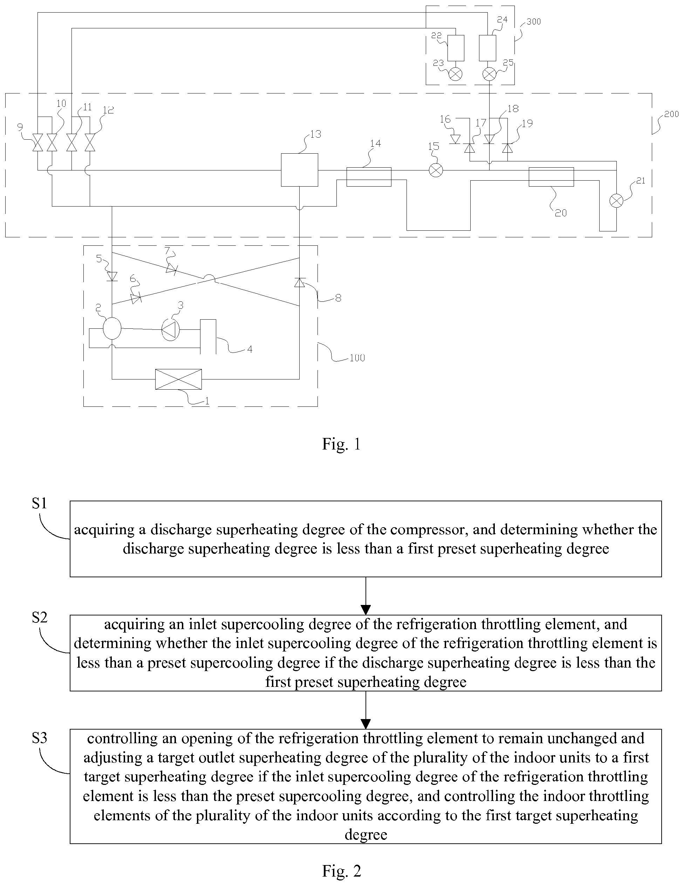

Specifically, as shown in Fig. 1, the outdoor unit 100 includes an outdoor heat exchanger 1, a four-way valve 2, a compressor 3, a liquid storage tank 4 and four one-way valves 5, 6, 7, 8. The compressor 3 includes an exhaust port connected to a first valve port of the four-way valve 2 and a return port connected to a first end of the liquid storage tank 4. A second end of the liquid storage tank 4 is connected to a second valve port of the four-way valve 2. A first end of the outdoor heat exchanger 1 is connected to a third valve port of the four-way valve 2, and a second end of the outdoor heat exchanger 1 is respectively connected to an outlet of the one-way valve 7 and an inlet of the one-way valve 8. A fourth valve port of the four-way valve 2 is respectively connected to an outlet of the one-way valve 5 and an inlet of the one-way valve 6.

The distribution device 200 includes a gas-liquid separator 13, a first heat exchanger 14, a second heat exchanger 20, an electronic expansion valve 15, a refrigeration throttling element 21, four solenoid valves 9, 10, 11, 12 and four one-way valves 16, 17, 18, 19. An inlet of a first heat exchange path of the first heat exchanger 14 is connected to a first end of the gas-liquid separator 13, an outlet of the first heat exchange path of the first heat exchanger 14 is connected to an inlet of a first heat exchange path of the second heat exchanger 20 through the electronic expansion valve 15, an outlet of the first heat exchange path of the second heat exchanger 20 is connected to an inlet of a second heat exchange path of the second heat exchanger 20 through a the refrigeration throttling element 21, an outlet of the second heat exchange path of the second heat exchanger 20 is connected to an inlet of a second heat exchange path of the first heat exchanger 14, and an outlet of the second heat exchange path of the first heat exchanger 14 is connected to a low pressure pipe of the outdoor unit 100. The first heat exchanger 14 and the second heat exchanger 20 may be a plate heat exchanger, and the refrigeration throttling element 21 may be an electronic expansion valve.

The plurality of the indoor units 300 includes a first indoor unit and a second indoor unit. The first indoor unit includes a first indoor heat exchanger 22 and a first indoor throttling element 23. The second indoor unit includes a second indoor heat exchanger 24 and a second indoor throttling element 25. The distribution device 200 is connected to the plurality of the indoor units 300 via the four solenoid valves 9, 10, 11, 12 and the four one-way valves 16, 17, 18, 19.

It should be illustrated that, in the distribution device 200, the first heat exchange path of the first heat exchanger 14 and the first heat exchange path of the second heat exchanger 20 constitute the main loop of the distribution device 200, with the outlet of the first heat exchange path of the second heat exchanger 20 as an outlet of the main loop. The second heat exchange path of the second heat exchanger 20 and the second heat exchange path of the first heat exchanger 14 constitute the cooling loop of the distribution device 200, with the inlet of the second heat exchange path of the second heat exchanger 20 as an inlet of the cooling loop.

When the multi-split system is operated in the pure refrigeration mode or the main refrigeration mode, a high temperature and high pressure refrigerant from the exhaust port of the compressor 3 is condensed by the outdoor heat exchanger 1, and then enters the gas-liquid separator 13 through the one-way valve 8. After a high pressure liquid refrigerant getting out of the first end of the gas-liquid separator 13 passes through the main loop of the distribution device 200, a part of which enters the refrigeration indoor units through the one-way valves 17, 19, and the other part of which enters the cooling loop through the refrigeration throttling element 21. A refrigerant getting out of the cooling loop is mixed with a refrigerant from the refrigeration indoor units and then enters the liquid storage tank 4 through the one-way valve 5 and the four-way valve 2, and finally returns to the return port of the compressor 3 to complete a refrigeration cycle.

During the multi-split system is operated in the pure refrigeration mode or the main refrigeration mode, if the refrigeration throttling element 21 is adjusted only taking a supercooling degree of a liquid refrigerant at the outlet of the main path as a control target, when a set target supercooling degree is reached, if an opening of the refrigeration throttling element 21 is too small, the refrigerant after heat exchanging with a refrigerant of the main loop and getting out of the outlet of the cooling loop has an overlarge superheating degree that, after mixed with a refrigerant from outlets of the refrigeration indoor units, produces return air with a larger superheating degree, which causes a discharge temperature of the compressor 3 to rise continuously, thereby affecting the reliability of the compressor 3. Moreover, In some situations, when the opening of the refrigeration throttling element 21 is increased, an outlet supercooling degree of the main loop will lag for a period of time, in such a case, if the control is performed according to the target supercooling degree, the opening of the refrigeration throttling element 21 will continue to increase until reaching the maximum. As an inlet pressure of the refrigeration throttling element 21 is reduced, the throttling effect is weakened, and a heat exchange temperature difference between the main loop and the cooling loop is greatly reduced, there is no inlet supercooling degree of the refrigeration throttling element 21 instead, which will lead to some problems, for example, split-flow among refrigeration indoor units is uneven, and throttling noise increases.

Moreover, when a gas-liquid mixture passes through the refrigeration throttling element 21, the gas causes blockage, so that the supercooling effect is further deteriorated. On the one hand, a pressure drop of the gas-liquid mixture flowing through the heat exchanger is greatly increased, an energy efficiency is reduced, and the noise is increased; on the other hand, the overlarge opening of the refrigeration throttling element 21 leads to that the refrigerant flowing through the refrigeration indoor units is greatly reduced, openings of the indoor throttling elements of the refrigeration indoor units are increased, and low pressure rises, thereby resulting in deteriorated refrigerating effect.

Therefore, in embodiments of the present disclosure, the control module is configured to acquire a discharge superheating degree of the compressor 3 and determine whether the discharge superheating degree is less than a first preset superheating degree; acquire an inlet supercooling degree of the refrigeration throttling element 21, and determine whether the inlet supercooling degree of the refrigeration throttling element is less than a preset supercooling degree if the discharge superheating degree is less than the first preset superheating degree; and control the opening of the refrigeration throttling element 21 to remain unchanged and adjust a target outlet superheating degree of the plurality of the indoor units to a first target superheating degree when the inlet supercooling degree of the refrigeration throttling element is less than the preset supercooling degree, and control the indoor throttling elements of the plurality of the indoor units 300 according to the first target superheating degree. The first preset superheating degree, the preset supercooling degree and the first target superheating degree may be set according to actual situations.

In an embodiment of the present disclosure, the control module is further configured to determine whether the compressor 3 is in a startup phase, and control the refrigeration throttling element 21 to maintain a preset opening when it is determined that the compressor 3 is in the startup phase. The preset opening may be set according to actual situations.

Specifically, when the multi-split system is operated in the pure refrigeration mode or the main refrigeration mode (the outdoor unit is in a heat releasing mode), the control module controls the refrigeration throttling element 21 to maintain a preset opening A1 when the compressor 3 is in the startup phase, and acquires a discharge superheating degree DSH of the compressor 3 and determines whether the discharge superheating degree DSH is less than a first preset superheating degree D1 when the compressor 3 is in a normal frequency control phase. When the discharge superheating degree DSH is less than the first preset superheating degree D1, the control module further determines whether an inlet supercooling degree SCM of the refrigeration throttling element 21 is less than a preset supercooling degree S1. If the inlet supercooling degree SCM of the refrigeration throttling element 21 is less than the preset supercooling degree S1, the control module controls the opening of the refrigeration throttling element 21 to remain unchanged and adjusts the target outlet superheating degree of the plurality of the indoor units up to the first target superheating degree. Then, the control module controls the indoor throttling elements of the refrigeration indoor units of the plurality of the indoor units according to the first target superheating degree after adjusted.

As the target outlet superheating degree of the plurality of the indoor units is increased, the opening of the indoor throttling element of the corresponding refrigeration indoor unit will decrease. Therefore, when the inlet supercooling degree of the refrigeration throttling element is low, by forbidding the opening of the refrigeration throttling element to increase, and decreasing the opening of the indoor throttling element of the refrigeration indoor unit, the inlet pressure of the refrigeration throttling element may be improved effectively, such that a supercooling state may be reached at the inlet of the refrigeration throttling element as soon as possible, thereby effectively avoiding the case that due to separate controls of the refrigeration throttling element and the indoor throttling element, when the refrigeration throttling element is closed, the indoor throttling element is opened, thereby failing to increase the inlet pressure of the refrigeration throttling element. Therefore, the establishment of the inlet supercooling degree of the refrigeration throttling element is completed quickly under the premise of ensuring the reliability of the compressor, and problems such as uneven split-flow and noise caused by lack of the inlet supercooling degree of the refrigeration throttling element are avoided.

According to an embodiment of the present disclosure, when the inlet supercooling degree of the refrigeration throttling element is greater than or equal to the preset supercooling degree, the control module controls the refrigeration throttling element 21 according to a target outlet superheating degree of the cooling loop, and adjusts the target outlet superheating degree of the plurality of the indoor units 300 to a second target superheating degree. The second target superheating degree is less than the first target superheating degree, and may be set according to actual situations.

In other words, when the inlet supercooling degree SCM of the refrigeration throttling element 21 is greater than or equal to the preset supercooling degree S1, the refrigeration throttling element 21 accesses to a control operation based on an outlet overheating degree of the cooling loop, i.e., the control module controls the refrigeration throttling element 21 according to a target outlet superheating degree CSHS of the cooling loop, at the same time, the target outlet superheating degree of the plurality of the indoor units 300 is turned down, so as to increase the openings of the indoor throttling elements of the refrigeration indoor units.

According to an embodiment of the present disclosure, when the discharge superheating degree is greater than or equal to the first preset superheating degree and less than the second preset superheating degree, the control module controls the refrigeration throttling element 21 according to the target outlet superheating degree of the cooling loop, and adjusts the target outlet superheating degree of the plurality of the indoor units 300 to the second target superheating degree, and the second target superheating degree is less than the first target superheating degree.

According to an embodiment of the present disclosure, when the discharge superheating degree is greater than or equal to the second preset superheating degree, the control module controls the refrigeration throttling element 21 according to the target outlet superheating degree of the cooling loop, and adjusts the target outlet superheating degree of the plurality of the indoor units 300 to a third target superheating degree, and the third target superheating degree is less than the second target superheating degree.

In other words, if the discharge superheating degree of the compressor 3 is relative large, the refrigeration throttling element 21 is opened, and the openings of the indoor throttling elements of the refrigeration indoor units are properly increased; if the discharge superheating degree of the compressor 3 is further enlarged, the openings of the indoor throttling elements of the refrigeration indoor units are properly increased further, so as to hierarchically control the indoor throttling elements of the refrigeration indoor units under the premise of ensuring the reliable operation of the compressor 3, thereby effectively preventing the capability of the system from being deteriorated, and avoiding the lack of the inlet supercooling degree of the refrigeration throttling element and the occurrence of problems such as uneven split-flow and noise, *etc.*

To sum up, with the multi-split system according to embodiments of the present disclosure, when the multi-split system is operated in the pure refrigeration mode or the main refrigeration mode, the control module acquires the discharge superheating degree of the compressor and the inlet supercooling degree of the refrigeration throttling element, and then hierarchically controls the refrigeration throttling element and the indoor throttling elements of the refrigeration indoor units according to the discharge superheating degree and the inlet supercooling degree of the refrigeration throttling element, so as to quickly establish the inlet supercooling degree of the refrigeration throttling element under the premise of ensuring the reliable operation of the compressor, effectively prevent the capability of the system from being deteriorated caused by the unreasonable openings of the refrigeration throttling element and the indoor throttling elements, and avoid the lack of the inlet supercooling degree of the refrigeration throttling element and the occurrence of problems such as uneven split-flow and noise, *etc.*

Fig. 2 is a flow chart of a control method of a multi-split system according to embodiments of the present disclosure.

In embodiments of the present disclosure, the multi-split system includes an outdoor unit, a distribution device, and a plurality of indoor units. The outdoor unit includes a compressor. The distribution device includes a main loop, a cooling loop, and a refrigeration throttling element disposed between an outlet of the main loop and an inlet of the cooling loop. The refrigeration throttling element is configured to perform a throttling control on a refrigerant entering the cooling loop when the multi-split system is operated in a main refrigeration mode or a pure refrigeration mode. And each of the plurality of the indoor units is provided with an indoor throttling element. Related details have been described hereinbefore, and will not be elaborated herein.

As shown in Fig. 2, the control method of the multi-split system may include the following steps.

At S1, a discharge superheating degree of the compressor is acquired, and it is determined whether the discharge superheating degree is less than a first preset superheating degree.

In an embodiment of the present disclosure, the control method of the multi-split system as described above further includes: determining whether the compressor is in a startup phase; and controlling the refrigeration throttling element to maintain a preset opening if the compressor is in the startup phase.

Specifically, when the multi-split system is operated in the pure refrigeration mode or the main refrigeration mode, if the compressor is in the startup phase, the refrigeration throttling element is controlled to maintain a preset opening A1 first, when the compressor is in a normal frequency control phase, a discharge superheating degree DSH of the compressor is acquired, and it is determined whether the discharge superheating degree DSH is less than a first preset superheating degree D1.

At S2, if the discharge superheating degree is less than the first preset superheating degree, an inlet supercooling degree of the refrigeration throttling element is acquired, and it is determined whether the inlet supercooling degree of the refrigeration throttling element is less than a preset supercooling degree.

At S3, if the inlet supercooling degree of the refrigeration throttling element is less than the preset supercooling degree, an opening of the refrigeration throttling element is controlled to remain unchanged, a target outlet superheating degree of the plurality of the indoor units is adjusted to a first target superheating degree, and the indoor throttling elements of the plurality of the indoor units are controlled according to the first target superheating degree.

Specifically, when the discharge superheating degree DSH is less than the first preset superheating degree D1, it is further determined whether an inlet supercooling degree SCM of the refrigeration throttling element is less than a preset supercooling degree S1. If the inlet supercooling degree SCM of the refrigeration throttling element is less than the preset supercooling degree S1, the opening of the refrigeration throttling element is controlled to remain unchanged, and the target outlet superheating degree of the plurality of the indoor units is adjusted up to the first target superheating degree. Then, the indoor throttling elements of the refrigeration indoor units of the plurality of the indoor units are controlled according to the first target superheating degree after adjusted.

As the target outlet superheating degree of the plurality of the indoor units is increased, the opening of the indoor throttling element of the corresponding refrigeration indoor unit will decrease. Therefore, when the inlet supercooling degree of the refrigeration throttling element is low, by forbidding the opening of the refrigeration throttling element to increase, and decreasing the opening of the indoor throttling element of the refrigeration indoor unit, an inlet pressure of the refrigeration throttling element may be improved effectively, such that a supercooling state may be reached at the inlet of the refrigeration throttling element as soon as possible, thereby effectively avoiding the case that due to separate controls of the refrigeration throttling element and the indoor throttling element, when the refrigeration throttling element is closed, the indoor throttling element is opened, thereby failing to increase the inlet pressure of the refrigeration throttling element. Therefore, the establishment of the inlet supercooling degree of the refrigeration throttling element is completed quickly under the premise of ensuring the reliability of the compressor, and problems such as uneven split-flow and noise caused by lack of the inlet supercooling degree of the refrigeration throttling element are avoided.

According to an embodiment of the present disclosure, when the inlet supercooling degree of the refrigeration throttling element is greater than or equal to the preset supercooling degree, the refrigeration throttling element is controlled according to a target outlet superheating degree of the cooling loop, and the target outlet superheating degree of the plurality of the indoor units is adjusted to a second target superheating degree, and the second target superheating degree is less than the first target superheating degree.

In other words, when the inlet supercooling degree SCM of the refrigeration throttling element is greater than or equal to the preset supercooling degree S1, the refrigeration throttling element accesses to a control operation based on an outlet overheating degree of the cooling loop, i.e., the refrigeration throttling element is controlled according to a target outlet superheating degree CSHS of the cooling loop, and at the same time, the target outlet superheating degree of the plurality of the indoor units is turned down, so as to increase the openings of the indoor throttling elements of the refrigeration indoor units.

According to an embodiment of the present disclosure, when the discharge superheating degree is greater than or equal to the first preset superheating degree and less than a second preset superheating degree, the refrigeration throttling element is controlled according to the target outlet superheating degree of the cooling loop, and the target outlet superheating degree of the plurality of the indoor units is adjusted to the second target superheating degree, and the second target superheating degree is less than the first target superheating degree.

According to an embodiment of the present disclosure, when the discharge superheating degree is greater than or equal to the second preset superheating degree, the refrigeration throttling element is controlled according to the target outlet superheating degree of the cooling loop, and the target outlet superheating degree of the plurality of the indoor units is adjusted to a third target superheating degree, and the third target superheating degree is less than the second target superheating degree.

In other words, if the discharge superheating degree of the compressor is relative large, the refrigeration throttling element is opened, and the openings of the indoor throttling elements of the refrigeration indoor units are properly increased; if the discharge superheating degree of the compressor is further enlarged, the openings of the indoor throttling elements of the refrigeration indoor units are properly increased further, so as to hierarchically control the indoor throttling elements of the refrigeration indoor units under the premise of ensuring the reliable operation of the compressor, thereby effectively preventing the capability of the system from being deteriorated, and avoiding the lack of the inlet supercooling degree of the refrigeration throttling element and the occurrence of problems such as uneven split-flow and noise, *etc.*

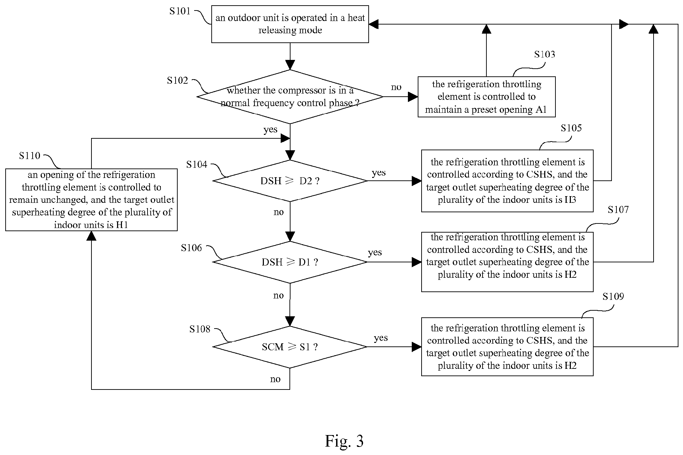

In order to make those skilled in the related art to understand the present disclosure more clearly, Fig. 3 shows a flow chart of a control method of a multi-split system according to an embodiment of the present disclosure. As shown in Fig. 3. The control method of the multi-split system includes the following steps.

At S101, an outdoor unit is operated in a heat releasing mode.

At S102, it is determined whether a compressor is in a normal frequency control phase. If yes, S104 is executed; if no, S103 is executed.

At S103, a refrigeration throttling element is controlled to maintain a preset opening A1.

At S104, it is determined whether a discharge superheating degree DSH is greater than or equal to a second preset superheating degree D2, i.e., it is determined whether a formula of DSH ≥ D2 is established. If yes, S105 is executed; if no, S106 is executed.

At S105, the refrigeration throttling element is controlled according to a target outlet superheating degree CSHS of a cooling loop, and a target outlet superheating degree of a plurality of indoor units is adjusted to a third target superheating degree H3.

At S106, it is determined whether the discharge superheating degree DSH is greater than or equal to a first preset superheating degree D1, i.e., it is determined whether a formula of DSH ≥ D1 is established, where D1 < D2. If yes, S107 is executed; if no, S108 is executed.

At S107, the refrigeration throttling element is controlled according to the target outlet superheating degree CSHS of the cooling loop, and the target outlet superheating degree of the plurality of the indoor units is adjusted to a third target superheating degree H2.

At S108, it is determined whether an inlet supercooling degree SCM of the refrigeration throttling element is greater than or equal to a preset supercooling degree, i.e., it is determined whether a formula of SCM ≥ S1 is established. If yes, S109 is executed; if no, S110 is executed.

At S109, the refrigeration throttling element is controlled according to the target outlet superheating degree CSHS of the cooling loop, and the target outlet superheating degree of the plurality of the indoor units is adjusted to a third target superheating degree H2.

At S110, an opening of the refrigeration throttling element is controlled to remain unchanged, and the target outlet superheating degree of the plurality of the indoor units is adjusted to a third target superheating degree H1, where H3 < H2 < H1.

To sum up, with the control method of the multi-split system according to embodiments of the present disclosure, when the multi-split system is operated in the pure refrigeration mode or the main refrigeration mode, the discharge superheating degree of the compressor and the inlet supercooling degree of the refrigeration throttling element are required, based on which the refrigeration throttling element and the indoor throttling elements of the refrigeration indoor units are hierarchically controlled, so as to quickly establish the inlet supercooling degree of the refrigeration throttling element under the premise of ensuring the reliable operation of the compressor, effectively prevent the capability of the system from being deteriorated caused by the unreasonable openings of the refrigeration throttling element and the indoor throttling elements, and avoid the lack of the inlet supercooling degree of the refrigeration throttling element and the occurrence of problems such as uneven split-flow and noise, *etc.*

In addition, embodiments of the present disclosure further provide a non-transitory computer-readable storage medium having stored therein computer programs that, when executed by a processor, cause the control method of the multi-split system as described above to be performed.

With the non-transitory computer-readable storage medium according to embodiments of the present disclosure, by executing the control method of the multi-split system as described above, the inlet supercooling degree of the refrigeration throttling element is quickly established under the premise of ensuring reliable operation of the compressor by controlling the refrigeration throttling element to remain unchanged and controlling the refrigerating indoor unit according to the target supercooling degree after adjusted.

In the specification, it is to be understood that, terms such as "first" and "second" are used herein for purposes of description only and are not intended to indicate or imply relative importance or significance or to imply the number of indicated technical features. Thus, the feature defined with "first" and "second" may explicitly or implicitly comprise one or more of this feature. In the description of the present invention, a phase of "a plurality of' means two or more than two, such as two or three, unless specified otherwise.

In the present invention, unless clearly specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples. In addition, in the absence of contradiction, those skilled in the art can combine the different embodiments or examples described in this specification, or combine the features of different embodiments or examples.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, in which the order of execution is different from what is shown or discussed, including executing functions in a substantially simultaneous manner or in an opposite order according to the related functions. These should be understood by those skilled in the art to which embodiments of the present invention belong.

The logic and/or step shown in the flow chart or described in other manners herein, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise (a non-exhaustive list): an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Although embodiments have been shown and described above, it would be appreciated that the above embodiments are are explanatory, illustrative, and cannot be construed to limit the present disclosure. Changes, alternatives, modifications, and variant can be made to the above embodiments by an ordinary person skilled in the art within the scope of the present disclosure.

## Claims

1. A control method of a multi-split system comprising an outdoor unit, a distribution device, and a plurality of indoor units; the outdoor unit comprising a compressor, the distribution device comprising a main loop, a cooling loop, and a refrigeration throttling element disposed between an outlet of the main loop and an inlet of the cooling loop and configured to perform a throttling control on a refrigerant entering the cooling loop when the multi-split system is operated in a main refrigeration mode or a pure refrigeration mode, and each of the plurality of the indoor units is provided with an indoor throttling element; the method comprising:
acquiring a discharge superheating degree of the compressor, and determining whether the discharge superheating degree is less than a first preset superheating degree;
acquiring an inlet supercooling degree of the refrigeration throttling element, and determining whether the inlet supercooling degree of the refrigeration throttling element is less than a preset supercooling degree if the discharge superheating degree is less than the first preset superheating degree; and
controlling an opening of the refrigeration throttling element to remain unchanged and adjusting a target outlet superheating degree of the plurality of the indoor units to a first target superheating degree if the inlet supercooling degree of the refrigeration throttling element is less than the preset supercooling degree, and controlling the indoor throttling elements of the plurality of the indoor units according to the first target superheating degree.

2. The control method according to claim 1, comprising controlling the refrigeration throttling element according to a target outlet superheating degree of the cooling loop, and adjusting the target outlet superheating degree of the plurality of the indoor units to a second target superheating degree when the inlet supercooling degree of the refrigeration throttling element is greater than or equal to the preset supercooling degree, wherein the second target superheating degree is less than the first target superheating degree.

3. The control method according to claim 1 or 2, comprising controlling the refrigeration throttling element according to a target outlet superheating degree of the cooling loop, and adjusting the target outlet superheating degree of the plurality of the indoor units to a second target superheating degree when the discharge superheating degree is greater than or equal to the first preset superheating degree and less than a second preset superheating degree, wherein the second target superheating degree is less than the first target superheating degree.

4. The control method according to claim 3, comprising controlling the refrigeration throttling element according to the target outlet superheating degree of the cooling loop, and adjusting the target outlet superheating degree of the plurality of the indoor units to a third target superheating degree when the discharge superheating degree is greater than or equal to the second preset superheating degree, wherein the third target superheating degree is less than the second target superheating degree.

5. The control method according to claim 1, further comprising:
determining whether the compressor is in a startup phase; and
controlling the refrigeration throttling element to maintain a preset opening if the compressor is in the startup phase.

6. A multi-split system, comprising:
an outdoor unit, comprising a compressor;
a distribution device, comprising:
a main loop,
a cooling loop, and
a refrigeration throttling element, disposed between an outlet of the main loop and an inlet of the cooling loop and configured to perform a throttling control on a refrigerant entering the cooling loop when the multi-split system is operated in a main refrigeration mode or a pure refrigeration mode;
a plurality of indoor units, each of the plurality of the indoor units being provided with an indoor throttling element; and
a control module, configured to:
acquire a discharge superheating degree of the compressor, and determine whether the discharge superheating degree is less than a first preset superheating degree;
acquire an inlet supercooling degree of the refrigeration throttling element, and determine whether the inlet supercooling degree of the refrigeration throttling element is less than a preset supercooling degree if the discharge superheating degree is less than the first preset superheating degree; and
control an opening of the refrigeration throttling element to remain unchanged and adjust a target outlet superheating degree of the plurality of the indoor units to a first target superheating degree when the inlet supercooling degree of the refrigeration throttling element is less than the preset supercooling degree, and control the indoor throttling elements of the plurality of the indoor units according to the first target superheating degree.

7. The multi-split system according to claim 6, wherein the control module is configured to control the refrigeration throttling element according to a target outlet superheating degree of the cooling loop, and adjust the target outlet superheating degree of the plurality of the indoor units to a second target superheating degree when the inlet supercooling degree of the refrigeration throttling element is greater than or equal to the preset supercooling degree, wherein the second target superheating degree is less than the first target superheating degree.

8. The multi-split system according to claim 6 or 7, wherein the control module is configured to control the refrigeration throttling element according to a target outlet superheating degree of the cooling loop, and adjust the target outlet superheating degree of the plurality of the indoor units to a second target superheating degree when the discharge superheating degree is greater than or equal to the first preset superheating degree and less than a second preset superheating degree, wherein the second target superheating degree is less than the first target superheating degree.

9. The multi-split system according to claim 8, wherein the control module is configured to control the refrigeration throttling element according to the target outlet superheating degree of the cooling loop, and adjust the target outlet superheating degree of the plurality of the indoor units to a third target superheating degree when the discharge superheating degree is greater than or equal to the second preset superheating degree, wherein the third target superheating degree is less than the second target superheating degree.

10. The multi-split system according to claim 6, wherein the control module is further configured to determine whether the compressor is in a startup phase, and control the refrigeration throttling element to maintain a preset opening when it is determined that the compressor is in the startup phase.

11. A non-transitory computer-readable storage medium having stored therein computer programs that, when executed by a processor, cause a control method of a multi-split system according to any one of claims 1 to 5 to be performed.
